# FASCICULE DE BREVET EUROPEEN

(11) **EP 0 975 107 B1**
(45) Date de publication et mention de la délivrance du brevet: **28.04.2004**
(21) Numéro de dépôt: 99401808.3
(22) Date de dépôt: 19.07.1999
(51) Int. Cl.: H04B 10/18, H04B 10/155, H04L 27/32

(54) **Dispositif d'émission de données optiques**
Sendevorrichtung für optische Daten
Transmitting device for optical data

(30) Priorité: 20.07.1998 FR 9809215
(43) Date de publication de la demande: 26.01.2000
(73) Titulaire: ALCATEL, 75008 Paris (FR)
(72) Inventeur: Penninckx, Denis, 91620 Nozay (FR); Bridoux, Christophe, 75013 Paris (FR)
(74) Mandataire: Fournier, Michel Robert Marie

(56) Documents cités:
- EP-A- 0 792 036
- PENNINCKX D ET AL: "EXPERIMENTAL VERIFICATION OF THE PHASE-SHAPED BINARY TRANSMISSION (PSBT) EFFECT" IEEE PHOTONICS TECHNOLOGY LETTERS, vol. 10, no. 4, avril 1998 (1998-04), pages 612-614, XP002098378
- FUKUCHI K ET AL: "10 GBIT/S-120 KM STANDARD FIBER TRANSMISSION EMPLOYING A NOVEL OPTICAL PHASE-ENCODED INTENSITY MODULATION FOR SIGNAL SPECTRUM COMPRESSION" CONFERENCE ON OPTICAL FIBER COMMUNICATIONS, DALLAS, FEB. 16 - 21, 1997,16 février 1997 (1997-02-16), page 270/271 XP000776468 INSTITUTE OF ELECTRICAL AND ELECTRONICS ENGINEERS
- PENNINCKX D ET AL: "THE PHASE-SHAPED BINARY TRANSMISSION (PSBT): A NEW TECHNIQUE TO TRANSMIT FAR BEYOND THE CHROMATIC DISPERSION LIMIT" IEEE PHOTONICS TECHNOLOGY LETTERS, vol. 9, no. 2, février 1997 (1997-02), pages 259-261, XP000683883

## Description

L'invention se situe dans le domaine des transmissions de données numériques par des moyens optiques. Elle concerne plus particulièrement la transmission à haut débit sur des liaisons à longue distance utilisant des fibres optiques.

Une telle transmission s'effectue au moyen d'un émetteur optique relié à un récepteur optique par l'intermédiaire de la fibre. L'émetteur utilise une onde porteuse optique issue d'un oscillateur laser et module généralement sa puissance en fonction de l'information à transmettre. Très souvent, on utilise une modulation de type NRZ ou RZ qui consiste à faire varier la puissance de l'onde porteuse entre deux niveaux : un niveau bas correspondant à une extinction de l'onde et un niveau haut correspondant à une puissance optique maximum. Ces variations de niveau sont déclenchées à des instants imposés par un rythme d'horloge qui définit ainsi des cellules temporelles successives allouées aux données binaires à transmettre. Par convention, les niveaux bas et hauts représentent respectivement les valeurs binaires "0" et "1".

D'une façon générale, la distance maximale d'une transmission est limitée par la possibilité pour les récepteurs de détecter sans erreur ces deux niveaux de puissance après propagation de l'onde modulée dans la liaison optique. Pour augmenter cette distance, on cherche généralement à augmenter le rapport entre la puissance optique moyenne des niveaux hauts à celle des niveaux bas, ce rapport définissant le "taux d'extinction" qui est une des caractéristiques de la modulation.

Par ailleurs, pour une distance et un taux d'extinction donnés, le débit d'information est limité par la dispersion chromatique engendrée dans les fibres. Cette dispersion qui résulte d'une dépendance de l'indice effectif de la fibre à la longueur d'onde de l'onde transportée a pour conséquence que la largeur des impulsions émises augmente au fur et à mesure de leur propagation le long de la fibre.

Ce phénomène est caractérisé par le coefficient de dispersion D de la fibre qui est défini en fonction de sa constante de propagation β par :
D = -(2πc/λ²).d²β/dω² , où λ et ω sont respectivement la longueur d'onde et la pulsation de l'onde.

La valeur et le signe du coefficient de dispersion D sont fonction du type de fibre et de la longueur d'onde de transmission. Par exemple, pour les fibres monomodes dites "standard" couramment utilisées, pour λ = 1,55 µm, le coefficient D est positif et vaut 17 ps/(nm.km). Par contre, le coefficient D est nul pour λ = 1,30 µm. D'une façon générale, le coefficient D pourra être positif, nul ou négatif selon la longueur d'onde et le type de fibre utilisés.

Lorsque le coefficient D est non nul, pour compenser le phénomène d'élargissement des impulsions dans le cas des modulations NRZ ou RZ, il a été proposé de créer une modulation de la phase ϕ - donc de fréquence ou de pulsation - de l'onde porteuse corrélativement à la modulation de puissance. La phase ϕ correspond ici à la convention selon laquelle le champs électrique de l'onde porteuse est représentée en fonction du temps t par une expression complexe du type : Ap exp(jωₒt) et le champs d'une onde émise S d'amplitude A par : S = A exp [j (ωₒt+ϕ)], où ωₒ est la pulsation de l'onde porteuse et ϕ la phase de l'onde émise.

Plus précisément, pour avoir une compensation de la dispersion chromatique et si le coefficient D est positif, la phase doit diminuer sur les fronts montants des impulsions et augmenter sur les fronts descendants. On dit alors que l'onde modulée présente un "chirp" transitoire négatif. Si par contre le coefficient D est négatif, la modulation de phase doit être inversée et le "chirp" transitoire sera positif.

Pour caractériser cette modulation, on introduit un paramètre α de "chirp" transitoire défini par :
α = 2P. (dϕ/dt)/(dP/dt) , où P est la puissance de l'onde modulée et ϕ sa phase exprimée en radiant.

On admet par exemple que pour les fibres standard précitées et pour λ voisin de 1,55 µm, la valeur du paramètre α doit être constante et sensiblement égale à -1 dans l'approximation où α est constant.

Selon une autre approche, il a été proposé de réduire la largeur de la bande spectrale du signal à transmettre au moyen d'un codage approprié. En particulier, on a proposé d'utiliser le code "duobinaire" bien connu dans le domaine des transmissions électriques. Ce code possède en effet la propriété de diviser par deux la largeur du spectre du signal. Selon la définition classique de ce code, on utilise un signal à trois niveaux symbolisés respectivement par 0, + et -. La valeur 0 binaire est codée par le niveau 0, la valeur 1 est codée soit par le niveau +, soit par le niveau - avec une règle de codage selon laquelle les niveaux codant deux blocs successifs de "1" entourant un nombre respectivement pair ou impair de "0" successifs sont respectivement identiques ou différents.

L'utilisation du code duobinaire pour les transmissions optiques a été mentionnée dans l'article intitulé : "10 Gbit/s unrepeatered three-level optical transmission over 100 km of standard fibre", X.Gu et al, ELECTRONICS LETTERS, 9 décembre 1993, Vol.29, No 25. Selon cet article, les trois niveaux 0, +, - correspondent respectivement à trois niveaux de puissance optique.

La demande de brevet français n°94 047 32, publiée sous le numéro FR-A-2 719 175 décrit également un codage duobinaire appliqué à l'optique. Selon ce document, la valeur "0" binaire correspond toujours à un niveau bas de la puissance optique mais les symboles + et - correspondent respectivement à un même niveau haut de puissance optique et se distinguent par un décalage de phase de la porteuse optique égal à 180°.

L'utilisation de ce dernier code duobinaire à inversion de phase est également mentionnée dans l'article "Optical duobinary transmission system with no receiver sensitivity degradation", K. Yonenaga et al, ELECTRONICS LETTERS, 16 février 1995, Vol.31, No.4.

Après simulations et essais en faisant varier les paramètres d'expérimentation, il est apparu qu'en fait une amélioration est obtenue à condition d'abord qu'un décalage de phase de l'onde porteuse se produise à l'intérieur de chaque "0" qui précède ou qui succède à chaque bloc de "1" ou chaque "1" isolé. La valeur absolue du décalage de phase peut être d'environ 180°. De plus, la puissance optique moyenne des niveaux bas qui codent les "0" doit avoir une valeur suffisante par rapport à celle des niveaux hauts pour créer des interférences intersymboles favorables à une compensation de la dispersion chromatique. Cela revient à dire que le taux d'extinction doit prendre une valeur finie.

Les observations précédentes ont conduit à définir un nouveau procédé de transmission optique appelé "Transmission Binaire à Profil de Phase Contrôlé" ou P S B T (de l'anglais : "Phase-Shaped Binary Transmission"). Ce procédé est notamment décrit dans la demande de brevet européen EP-A-0 792 036, déposée sous le n°97400345.1.

Pour la mise en oeuvre du procédé P S B T, il convient donc de réaliser un dispositif d'émission capable notamment d'appliquer à l'onde porteuse un décalage de phase de l'ordre de 180° en valeur absolue à l'intérieur de chaque cellule qui correspond à un "0" logique et qui précède ou succède à toute cellule contenant un "1" logique.

Une solution utilisant par exemple un oscillateur laser couplé à un modulateur de puissance électro-optique lui-même couplé à un modulateur de phase électro-optique présentent cependant l'inconvénient de nécessiter une commande électronique complexe et coûteuse.

En réalité, il n'y a aucun inconvénient à ce que les décalages de phase soit effectués systématiquement dans chaque cellule contenant un "0" logique. Cette possibilité conduit à une réalisation plus simple utilisant un modulateur interférométrique de type "Mach-Zehnder". Un tel modulateur comprend une structure interférométrique constituée d'un guide optique d'entrée qui se subdivise en deux branches qui se recombinent pour former un guide de sortie. Des électrodes sont prévues pour appliquer respectivement des champs électriques au travers des deux branches. Lorsque le guide optique d'entrée reçoit une onde porteuse de puissance constante, deux ondes partielles se propagent dans les deux branches, puis interférent en sortie. Le guide de sortie fournit alors une onde dont la puissance et la phase dépendent des valeurs des tensions électriques de commande appliquées sur les électrodes. Des décalages de phase de 180° environ peuvent se produire aux instants où la puissance instantanée de l'onde émise est nulle

Pour satisfaire aux conditions de la modulation P S B T, la commande électrique doit d'abord présenter une modulation d'amplitude à trois niveaux principaux en fonction du signal à émettre, conformément au codage duobinaire. La commande doit aussi présenter une oscillation entretenue de faible amplitude durant les séquences de "0" consécutifs. Il convient donc de polariser les électrodes de sorte qu'en l'absence de modulation, les composantes continues des tensions électriques appliquées soient telles que l'interférence des deux ondes partielles soit la plus destructive possible.

Dans le cas où la commande modulée est appliquée sur une seule des électrodes, l'autre électrode recevant une tension de polarisation fixe, le signal optique issu du modulateur présente un "chirp" transitoire non nul qui peut être positif ou négatif selon la séquence de données binaires rencontrée et selon que l'on se trouve sur un front montant ou descendant de puissance.

Pour éliminer ce "chirp" transitoire non contrôlé, une solution consiste à effectuer une commande en "push-pull" selon laquelle on applique sur l'une des électrodes une tension modulée comme indiqué précédemment et sur l'autre électrode une tension modulée en opposition de phase.

Les essais sur fibres standard ont montré que la modulation P S B T autorise des distances de transmission bien supérieures à celles permises par les modulations NRZ ou RZ. Par exemple, on peut transmettre un signal avec un débit de 10 Gbit/s sur une distance de 240 km alors que la modulation NRZ ne permet qu'environ 70km.

Toutefois les réalisations de modulateurs P S B T , notamment celles à structure interférométrique évoquées ci-dessus, ne permettent pas toujours de garantir la meilleure qualité de transmission, quelles que soient les conditions d'exploitation.

Par exemple, pour les transmissions transocéaniques à longue distance, la liaison optique comporte de nombreux amplificateurs. Le taux d'extinction subit alors des dégradations importantes dues au bruit engendré par les amplificateurs. Il est alors utile de pouvoir ajuster ce taux d'extinction à l'émission pour lui donner une valeur optimale, c'est-à-dire suffisamment élevée pour tenir compte des amplificateurs mais suffisamment basse pour que les interférences intersymboles compensent l'élargissement des impulsions dû notamment à la dispersion chromatique. Un tel ajustement est cependant délicat à mettre au point au niveau de la commande du modulateur P S B T.

Les études montrent par ailleurs que les distances de transmission par la modulation P S B T peuvent être augmentées en introduisant un "chirp" transitoire dont le signe et la valeur optimale dépendent notamment du coefficient de dispersion D de la fibre, de la distance de transmission souhaitée ainsi que des effets non linéaires (effet Kerr). Comme on l'a vu précédemment, la solution du modulateur interférométrique ne permet pas facilement d'imposer un "chirp" transitoire de signe et de valeur donnés.

Aussi l'invention a pour but de proposer un dispositif d'émission à flexibilité d'utilisation accrue et qui facilite son optimisation pour chaque type de liaison optique et pour chaque distance de transmission.

Plus précisément l'invention a pour objet un dispositif d'émission d'un signal optique sous la forme d'une onde porteuse optique modulée en fonction d'un signal électrique d'entrée binaire, un rythme d'horloge définissant des cellules temporelles successives délimitant dans le signal d'entrée des premiers ou seconds niveaux de modulation, ledit dispositif comportant un premier modulateur électro-optique apte à fournir en réponse audit signal électrique d'entrée un signal optique à phase contrôlée présentant une puissance optique modulée entre des niveaux bas et des niveaux hauts correspondant respectivement auxdits premiers et seconds niveaux de modulation du signal d'entrée, et un décalage de phase à l'intérieur de chaque cellule temporelle qui contient un niveau bas de puissance et qui précède ou succède à une cellule qui contient un niveau haut de puissance, ledit dispositif étant caractérisé en ce qu'il comporte un second modulateur électro-optique commandé par ledit signal d'entrée et couplé optiquement au premier modulateur électro-optique, de façon à appliquer audit signal optique à phase contrôlée une modulation complémentaire de puissance et/ou de phase de façon respectivement à modifier son taux d'extinction et/ou à lui appliquer un "chirp" transitoire.

Afin de faciliter la mise au point des caractéristiques de modulation du dispositif, le premier modulateur électro-optique sera de préférence tel qu'il n'applique pas de "chirp" transitoire au signal optique à phase contrôlée.

Cette dernière condition peut être satisfaite en utilisant une structure interférométrique de type "Mach-Zehnder" avec une commande en "push-pull".

Plus précisément, selon ce mode de réalisation conforme à l'invention, le premier modulateur électro-optique comporte :
- une structure interférométrique de type "Mach-Zehnder" selon laquelle un guide optique d'entrée se subdivise en deux branches pour guider deux ondes partielles, lesdites deux branches se recombinant pour former un guide de sortie, des électrodes étant prévues pour appliquer respectivement des champs électriques au travers desdites deux branches,
- un circuit de commande pour appliquer respectivement sur les électrodes des tensions de commande présentant autour de composantes continues des composantes de modulation en opposition de phase, lesdites composantes continues étant telles qu'en l'absence de composantes de modulation, lesdites ondes partielles interfèrent de façon destructive.

D'autres aspects et avantages de l'invention apparaîtront dans la suite de la description en référence aux figures.
- La figure 1 représente pour différentes valeurs de chirp transitoire les variations de la sensibilité d'un récepteur en fonction de la distance de propagation.
- La figure 2 représente un dispositif d'émission selon l'invention.
- Les figures 3 et 4 représentent les courbes caractéristiques d'un modulateur à structure interférométrique de type "Mach-Zehnder".
- La figure 5 représente un circuit de commande du modulateur interférométrique.
- Les figures 6 et 7 représentent des chronogrammes permettant d'expliquer le fonctionnement du dispositif d'émission selon l'invention.

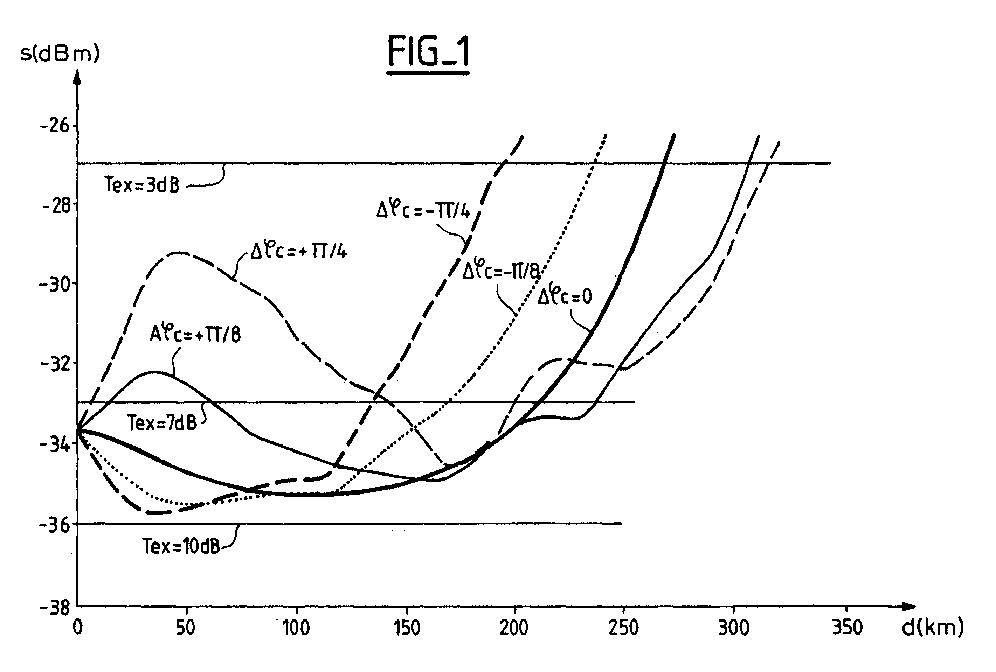

Les courbes de la figure 1 représentent la sensibilité s d'un récepteur en fonction de la distance de propagation d sur fibre standard pour une modulation P S B T à 10Gbit/s et pour différentes valeurs de "chirp" transitoire. Les courbes ont été établies pour des liaisons sans amplificateurs.

La sensibilité qui constitue une évaluation de la qualité de la transmission est définie ici comme la valeur minimale de la puissance optique moyenne reçue (en dBm) pour obtenir en réception un taux d'erreur fixé à 10⁻⁹.

Chacune des courbes correspond à une valeur de "chirp" transitoire caractérisée ici par la valeur du décalage de phase Δϕc introduit à chaque transition du niveau de puissance optique du signal émis. Par exemple, la courbe en trait continu épais correspond à Δϕc = 0, c'est-à-dire à une modulation P S B T pure.

On voit notamment qu'un décalage de phase Δϕc négatif compris entre -π/8 et -π/4 favorise la transmission pour les distances inférieures à 70 km, tandis qu'un décalage de phase positif compris entre +π/8 et +π/4 est favorable pour les distances supérieures à 240 km.

Par ailleurs, pour un niveau de bruit usuel, on peut associer à la sensibilité s un taux d'extinction correspondant Tex, comme montré sur la figure. On constate alors qu'un taux d'extinction de 7 dB est suffisant en pratique.

D'autres mesures et simulations pour des transmissions à longue distance ont par ailleurs montré l'influence du taux d'extinction sur la qualité du signal reçu. Par exemple, pour une liaison de 9000 km munie d'amplificateurs tous les 30 km, un taux d'extinction de 13 dB autorise un débit de 10 Gbit/s. D'une façon générale, on sera amené à augmenter le taux d'extinction lorsque la distance entre amplificateurs augmente et lorsque la distance totale de la liaison augmente.

Ces quelques données expérimentales dans le cadre de la modulation P S B T montrent l'utilité de pouvoir ajuster facilement le taux d'extinction et/ou d'introduire un "chirp" transitoire de signe et de valeur déterminés.

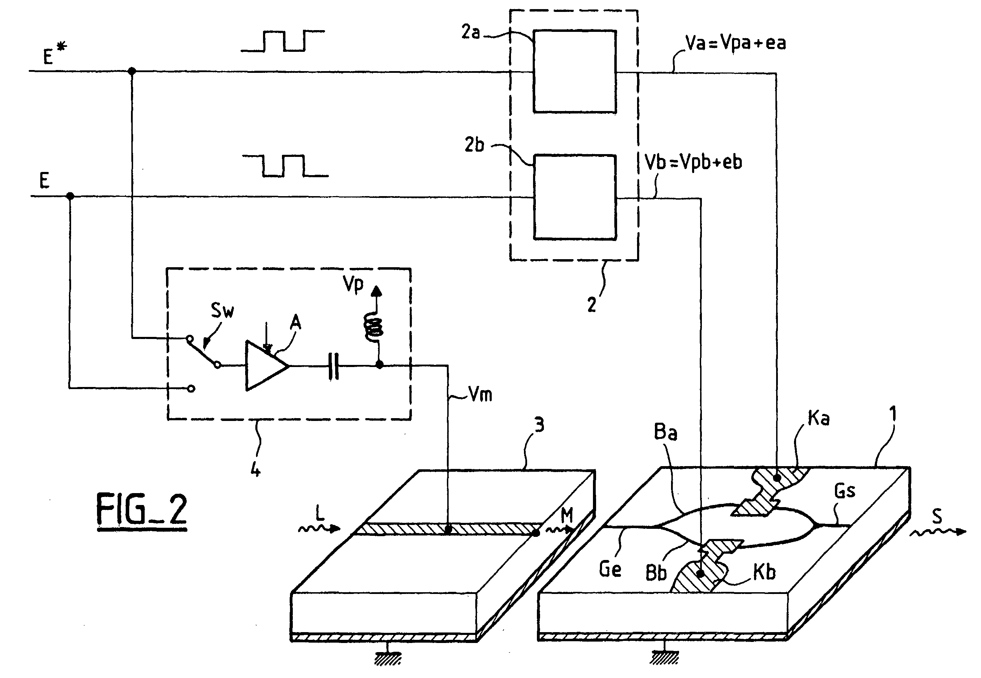

La figure 2 représente schématiquement un exemple de réalisation d'un dispositif d'émission selon l'invention qui permet ces ajustements.

Le dispositif comporte un premier modulateur électro-optique de type Mach-Zehnder constitué d'une structure interférométrique 1 et d'un premier circuit électronique de commande 2. De façon connue en soi, la structure peut être réalisé sur un substrat de niobate de lithium LiNbO₃. On peut aussi utiliser une structure de même configuration mais réalisée sur un substrat d'éléments III-V, tel que le phosphure d'indium InP. La structure 1 comporte un guide d'entrée Ge qui se subdivise en deux branches Ba, Bb qui se rejoignent ensuite pour former un guide de sortie Gs. Des électrodes Ka, Kb placées respectivement sur les branches Ba, Bb sont prévues pour recevoir du circuit de commande 2 les tensions Va, Vb. Une troisième électrode placée sur la face inférieure de la structure 1 est reliée à la masse.

Le guide d'entrée Ge est couplé à un second modulateur électro-optique constitué d'un composant optoélectronique 3 et d'un second circuit électronique 4 pour le commander.

Le composant 3 du second modulateur reçoit une onde continue L délivrée par un oscillateur laser non représenté et fournit une onde modulée M à la structure 1 qui délivre le signal optique de sortie S par son guide de sortie Gs.

Les circuits de commande 2 et 4 reçoivent le signal électrique d'entrée E et son complément E*.

Le circuit 4 comporte un commutateur SW pour appliquer sélectivement à l'entrée d'un amplificateur A le signal E ou son complément E*. L'amplificateur est suivi d'un coupleur de façon à appliquer sur l'électrode du composant 3 une tension de commande Vm ayant une composante de modulation qui reproduit la modulation du signal E ou du signal E*. Le coupleur permet aussi d'imposer à la tension de commande Vm une composante continue Vp qui définit la polarisation du composant 3.

Si l'on ne cherche qu'à introduire un "chirp" transitoire, le composant 3 peut être un modulateur de phase de type connu. Sa structure est par exemple identique à celle d'une des branches de la structure interférométrique 1. Le signe du "chirp" transitoire sera fixé par la position du commutateur SW tandis que sa valeur pourra être choisie en ajustant l'amplitude de modulation de la tension de commande Vm par un réglage du gain de l'amplificateur A.

Si l'on veut ajuster le taux d'extinction, le composant 3 sera un modulateur de puissance optique tel qu'un modulateur à électroabsorption ou bien un modulateur à structure interférométrique de type "Mach-Zehnder" analogue à la structure 1. On pourra alors ajuster le taux d'extinction mais aussi introduire un "chirp" transitoire en jouant sur la polarisation du modulateur à électroabsorption ou en modulant la tension d'une seule des branches de la structure "Mach-Zehnder".

Le premier modulateur électro-optique 1, 2 est prévu pour réaliser une modulation P S B T pure, c'est-à-dire sans appliquer un "chirp" transitoire. Il convient donc de réaliser une commande en "push-pull" et pour cela, le circuit de commande 2 doit appliquer respectivement sur les électrodes Ka, Kb des tensions de commande Va, Vb présentant autour de composantes continues Vpa, Vpb des composantes de modulation ea, eb en opposition de phase. De plus, ces composantes continues Vpa, Vpb sont telles qu'en l'absence de composantes de modulation ea, eb, les ondes partielles sortant des branches Ba, Bb interfèrent de façon destructive au niveau du guide de sortie Gs.

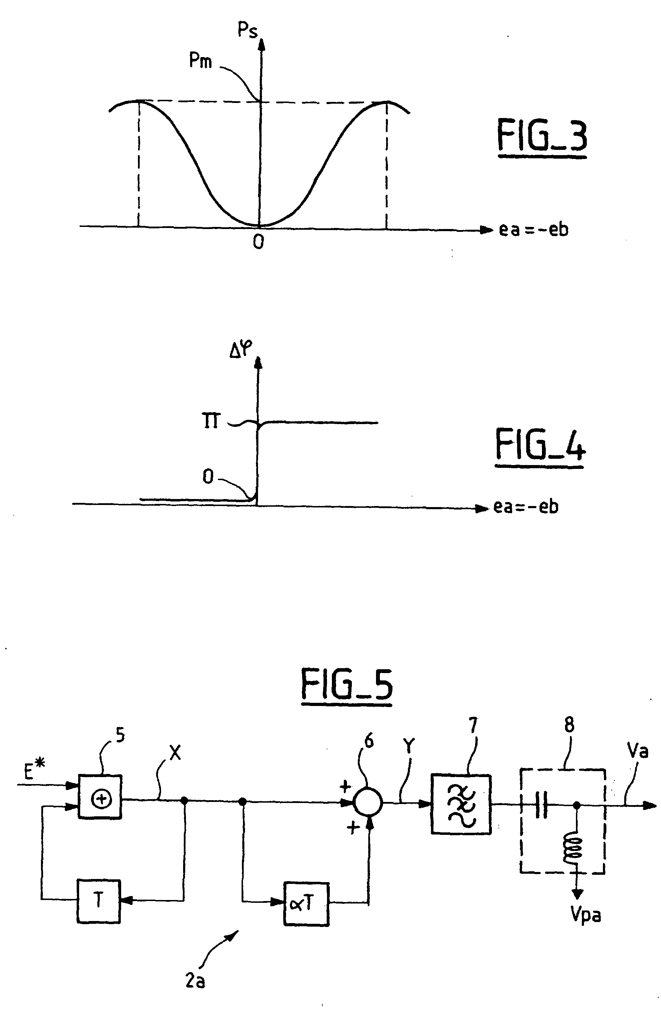

Dans ces conditions, le premier modulateur possède les caractéristiques fonctionnelles des figures 3 et 4 qui représentent respectivement la puissance optique Ps et le décalage de phase Δϕ (modulo 2π) du signal S en fonction des composantes de modulation ea, eb.

Selon un mode de réalisation, le circuit électronique de commande 2 est constitué des deux modules identiques 2b, 2a recevant respectivement le signal électrique d'entrée binaire E et son complément E*.

Un schéma plus détaillée du circuit 2a est montré sur la figure 5. Il comporte un précodeur constitué d'une porte OU EXCLUSIF 5 dont les entrées reçoivent respectivement E* et le signal de sortie X de la porte retardé d'un intervalle de temps bit T du signal d'entrée. Un additionneur analogique 6 reçoit le signal X et ce même signal retardé de la valeur αT, où α est légèrement inférieur à 1. L'additionneur 6 fournit le signal Y à un filtre passe-bas 7 dont la sortie est appliquée à un coupleur 8. Le coupleur 8 superpose la composante alternative du signal issu du filtre à une tension de polarisation Vpa pour former la tension de commande Va appliqué à l'électrode Ka. La tension Vpa constitue ainsi la composante continue de la tension de commande Va.

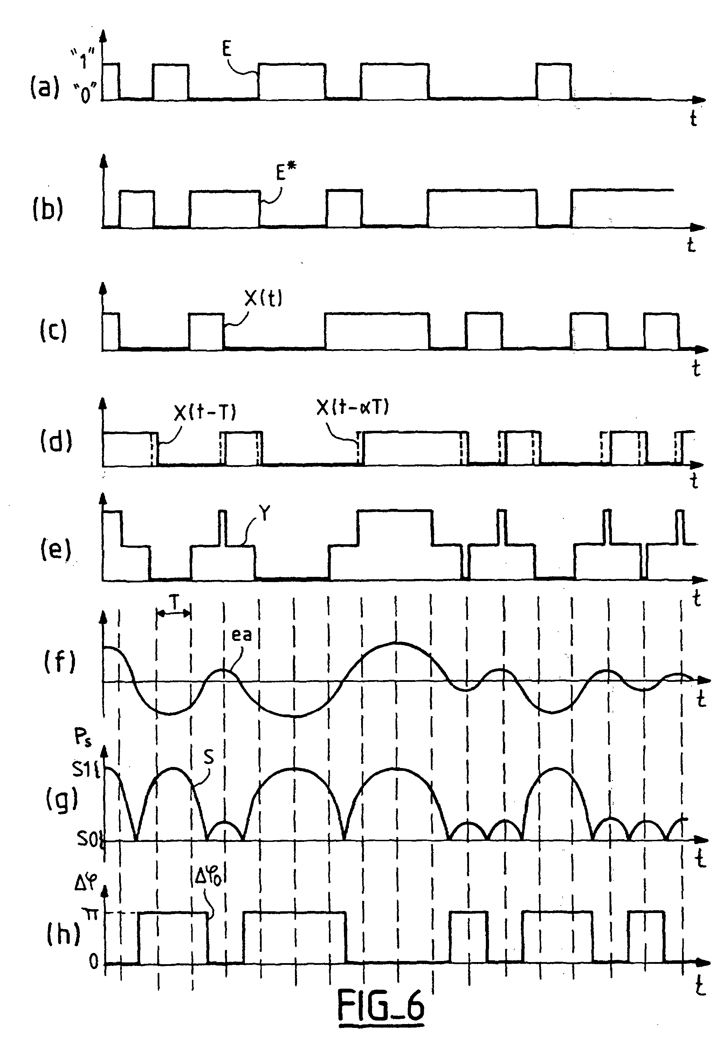

Le fonctionnement du circuit de la figure 5 va maintenant être expliquée à l'aide des chronogrammes (a) à (f) de la figure 6. Le chronogramme (a) montre un exemple de signal électrique d'entrée E de type NRZ. Les chronogrammes (b) et (c) montrent respectivement le complément E* de E et le signal X(t) issu du précodeur. Le chronogramme (d) montre ce signal X retardé de T : X(t-T) et de αT : X(t-αT). Le signal Y apparaît sur le chronogramme (e) et la composante de modulation ea de la tension de commande Va apparaît sur le chronogramme (f). On peut noter que le retard αT inférieur à T à pour effet d'entretenir une ondulation dans les suites de "0" du signal ea, ce qui est essentiel pour la modulation P S B T.

Le circuit 2b étant identique au circuit 2a mais recevant E, il délivre une tension de commande Vb dont la composante de modulation eb est en opposition de phase par rapport à ea.

Si l'onde M n'était pas modulée comme c'est le cas pour une modulation P S B T pure, le signal optique de sortie S présenterait alors les variations de puissance Ps et de phase Δϕ = Δϕ0 représentées sur les chronogrammes (g) et (h). On peut noter que la puissance optique est modulée entre des niveaux bas S0 et des niveaux hauts S1 qui correspondent respectivement aux deux niveaux de modulation du signal d'entrée E. Par ailleurs, un décalage de phase de sensiblement 180° se produit à l'intérieur de chaque cellule temporelle (intervalle de temps bit T) qui contient un niveau bas de puissance S0 et en particulier qui précède ou succède à une cellule qui contient un niveau haut de puissance S1.

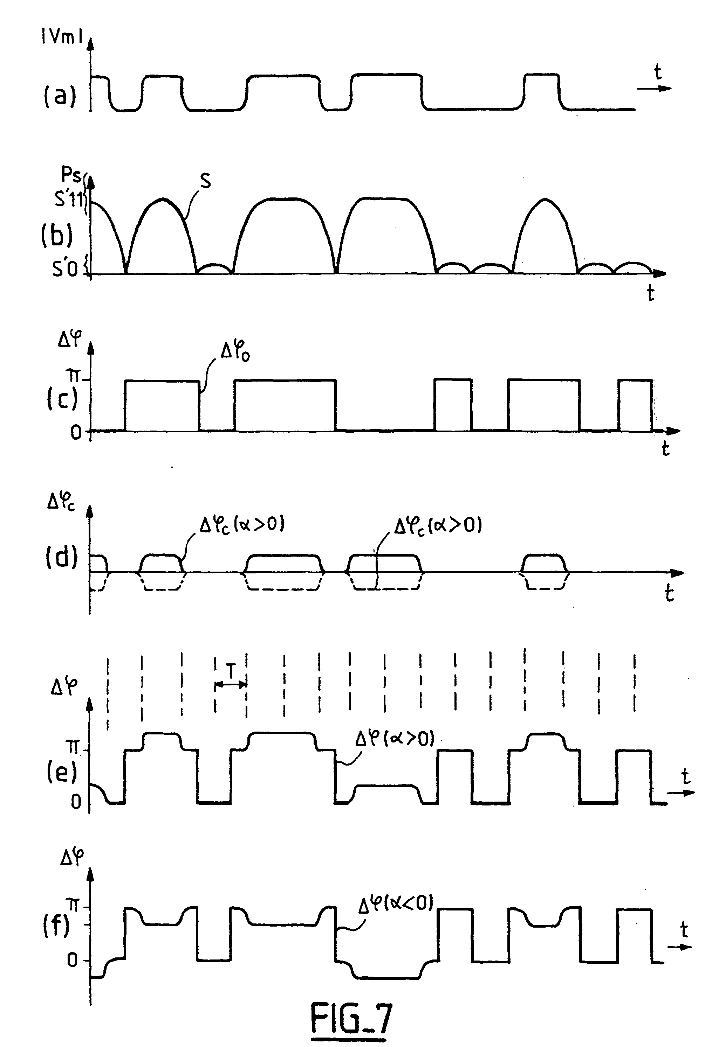

Les effets du second modulateur 3, 4 vont maintenant être exposés à l'aide des chronogrammes (a) à (f) de la figure 7. Le chronogramme (a) représente la modulation en valeur absolue de la tension de commande du composant 3 et. qui reproduit donc la modulation du signal E ou de son complément E*.

Dans le cas où le second modulateur est un modulateur de puissance optique, l'onde M a une puissance modulée et on obtiendra un signal S dont la puissance Ps est modulée entre des niveaux bas S'0 et des niveaux hauts S'1 tels que le taux d'extinction est amélioré par rapport à la modulation P S B T pure, comme représenté sur le chronogramme (b). Par contre, la phase Δϕ reste inchangée (chronogrammes (c)). Dans le cas où le second modulateur est un modulateur de phase, l'onde M a une phase Δϕc modulée correspondant à un chirp α positif ou négatif comme représenté sur le chronogramme (d) respectivement en trait plein et en pointillés. La phase Δϕ du signal S suit alors les variations représentées respectivement sur les chronogrammes (e) et (f).

## Revendications

1. Dispositif d'émission d'un signal optique (S) sous la forme d'une onde porteuse optique (L) modulée en fonction d'un signal électrique d'entrée binaire (E), un rythme d'horloge définissant des cellules temporelles successives délimitant dans le signal d'entrée (E) des premiers ou seconds niveaux de modulation, ledit dispositif comportant un premier modulateur électro-optique (1, 2) apte à fournir en réponse audit signal électrique d'entrée (E) un signal optique à phase contrôlée présentant une puissance optique modulée entre des niveaux bas (S0) et des niveaux hauts (S1) correspondant respectivement auxdits premiers et seconds niveaux de modulation du signal d'entrée (E), et un décalage de phase (Δϕ) à l'intérieur de chaque cellule temporelle qui contient un niveau bas de puissance (S0) et qui précède ou succède à une cellule qui contient un niveau haut de puissance (S1),
ledit dispositif étant **caractérisé en ce qu'**il comporte un second modulateur électro-optique (3, 4) commandé par ledit signal d'entrée (E) et couplé optiquement au premier modulateur électro-optique (1, 2), de façon à appliquer audit signal optique à phase contrôlée une modulation complémentaire de puissance et/ou de phase de façon respectivement à modifier son taux d'extinction et/ou à lui appliquer un "chirp" transitoire.

2. Dispositif d'émission selon la revendication 1, **caractérisé en ce que** ledit premier modulateur électro-optique (1, 2) est tel qu'il n'applique pas de "chirp" transitoire audit signal optique à phase contrôlée.

3. Dispositif d'émission selon la revendication 2, **caractérisé en ce que** ledit premier modulateur électro-optique (1, 2) comporte :
- une structure interférométrique (1) de type "Mach-Zehnder" selon laquelle un guide optique d'entrée (Ge) se subdivise en deux branches (Ba, Bb) pour guider deux ondes partielles, lesdites deux branches se recombinant pour former un guide de sortie (Gs), des électrodes (Ka, Kb) étant prévues pour appliquer respectivement des champs électriques au travers desdites deux branches (Ba, Bb),
- un circuit de commande (2) pour appliquer respectivement sur les électrodes (Ka, Kb) des tensions de commande (Va, Vb) présentant autour de composantes continues (Vpa, Vpb) des composantes de modulation (ea, eb) en opposition de phase, lesdites composantes continues (Vpa, Vpb) étant telles qu'en l'absence de composantes de modulation (ea, eb), lesdites ondes partielles interfèrent de façon destructive.

4. Dispositif d'émission selon l'une des revendications 1 à 3, **caractérisé en ce que** ledit second modulateur électro-optique (3, 4) est un modulateur à électroabsorption.

5. Dispositif d'émission selon l'une des revendications 1 à 3, **caractérisé en ce que** ledit second modulateur électro-optique (3, 4) est un modulateur à structure interférométrique de type "Mach-Zehnder".

6. Dispositif d'émission selon l'une des revendications 1 à 3, **caractérisé en ce que** ledit second modulateur électro-optique (3, 4) est un modulateur à électroabsorption polarisé pour appliquer un "chirp" non nul.

7. Dispositif d'émission selon l'une des revendications 1 à 3, **caractérisé en ce que** ledit second modulateur électro-optique (3, 4) est un modulateur à structure interférométrique de type "Mach-Zehnder" polarisée pour appliquer un "chirp" non nul.

## Patentansprüche

1. Sendevorrichtung für ein optisches Signal (S) in Form einer optischen Trägerwelle (L), die in Abhängigkeit von einem binären elektrischen Eingangssignal (E) moduliert wird, wobei ein Uhrentakt aufeinander folgende Zeitzellen definiert, welche im Eingangssignal (E) erste oder zweite Modulationsaussteuerungswerte definieren, wobei diese Vorrichtung einen ersten elektrooptischen Modulator (1, 2) aufweist, der in der Lage ist, als Antwort auf das genannte elektrische Eingangssignal (E) ein optisches Signal mit kontrollierter Phase zu liefern, welches eine optische Leistung aufweist, die zwischen niedrigen Aussteuerungswerten (S0) und hohen Aussteuerungswerten (S1) moduliert wird, welche den genannten ersten beziehungsweise zweiten Aussteuerungswerten des Eingangssignals (E) entsprechen, sowie eine Phasenverschiebung (Δϕ) im Inneren jeder Zeitzelle, die ein niedriges Leistungsniveau (S0) enthält und die einer Zelle vorausgeht oder auf sie folgt, welche ein hohes Leistungsniveau (S1) enthält;
hierbei ist die Vorrichtung **dadurch gekennzeichnet, dass** sie einen zweiten elektrooptischen Modulator (3, 4) aufweist, der von dem genannten Eingangssignal (E) gesteuert wird und optisch mit dem ersten elektrooptischen Modulator (1, 2) in der Weise gekoppelt ist, dass auf das optische Signal mit kontrollierter Phase eine ergänzende Leistungs- und/oder Phasenmodulation angewendet wird, und zwar so, dass ihr Extinktionsfaktor modifiziert beziehungsweise auf sie ein vorübergehender "Chirp" angewendet wird.

2. Sendevorrichtung nach Anspruch 1, **dadurch gekennzeichnet, dass** der erste elektrooptische Modulator (1, 2) von der Art ist, dass auf das optische Signal mit kontrollierter Phase keinen vorübergehender "Chirp" angewendet wird.

3. Sendevorrichtung nach Anspruch 2, **dadurch gekennzeichnet, dass** der erste elektrooptische Modulator folgendes (1, 2) aufweist:
- eine Interferometer-Struktur (1) des Typs "Mach-Zehnder", der zufolge sich ein Eingangs-Lichtwellenleiter (Ge) in zwei Zweige (Ba, Bb) unterteilt, um zwei Teilwellen zu leiten, wobei sich die zwei Zweige wieder vereinen, um einen Ausgangs-Lichtwellenleiter (Gs) zu bilden, wobei Elektroden (Ka, Kb) dafür vorgesehen sind, elektrische Felder durch diese beiden Zweige (Ba, Bb) hindurch anzuwenden;
- einen Steuerkreis (2), um an die Elektroden (Ka, Kb) jeweils Steuerspannungen (Va, Vb) anzulegen, die um die Gleichspannungskomponenten (Vpa, Vpb) herum Modulationskomponenten (ea, eb) mit entgegengesetzter Phase aufweisen, wobei diese Gleichspannungskomponenten (Vpa, Vpb) von der Art sind, dass beim Fehlen von Modulationskomponenten (ea, eb) diese Teilwellen auf zerstörerische Weise interferieren.

4. Sendevorrichtung nach einem der Ansprüche 1 bis 3, **dadurch gekennzeichnet, dass** der zweite elektrooptische Modulator (3, 4) ein Elektroabsorptionsmodulator ist.

5. Sendevorrichtung nach einem der Ansprüche 1 bis 3, **dadurch gekennzeichnet, dass** der zweite elektrooptische Modulator (3, 4) ein Modulator mit einer Mach-Zehnder-Interferometerstruktur ist.

6. Sendevorrichtung nach einem der Ansprüche 1 bis 3, **dadurch gekennzeichnet, dass** der zweite elektrooptische Modulator (3, 4) ein Modulator ist, der mit polarisierter Elektroabsorption arbeitet, um einen "Chirp" ungleich Null anzuwenden.

7. Sendevorrichtung nach einem der Ansprüche 1 bis 3, **dadurch gekennzeichnet, dass** der zweite elektrooptische Modulator (3, 4) ein Modulator mit polarisierter Mach-Zehnder-Interferometerstruktur ist, um einen "Chirp" ungleich Null anzuwenden.

## Claims

1. A system for transmitting an optical signal (S) in the form of an optical carrier wave (L) modulated as a function of an input binary electrical signal (E), a clock rate defining successive time cells delimiting in the input signal (E) first or second modulation levels, said device including a first electro-optical modulator (1, 2) adapted to respond to said input electrical signal (E) by supplying a controlled phase optical signal having optical power modulated between low levels (S0) and high levels (S1) respectively corresponding to said first and second modulation levels of the input signal (E), and a phase shift (Δϕ) within each time cell that contains a low power level (S0) and which precedes or succeeds a cell that contains a high power level (S1),
which system is **characterized in that** it includes a second electro-optical modulator (3, 4) controlled by said input signal (E) and optically coupled to the first electro-optical modulator (1, 2) to apply complementary power and/or phase modulation to said controlled phase optical signal so as respectively to modify its extinction ratio and/or to apply a transient "chirp" to it.

2. A transmission system according to claim 1, **characterized in that** said first electro-optical modulator (1, 2) does not apply any transient "chirp" to said controlled phase optical signal.

3. A transmission system according to claim 2, **characterized in that** said first electro-optical modulator (1, 2) includes:
- a "Mach-Zehnder" interferometer structure (1) wherein an input optical guide (Ge) splits into two branches (Ba, Bb) to guide two partial waves, said two branches combining again to form an output guide (Gs), respective electrodes (Ka, Kb) being provided to apply electrical fields to said two branches (Ba, Bb), and
- a control circuit (2) for applying to the electrodes (Ka, Kb) respective control voltages (Va, Vb) having DC components (Vpa, Vpb) between modulation components (ea, eb) in phase opposition, said DC components (Vpa, Vpb) being such that in the absence of modulation components (ea, eb) said partial waves interfere destructively.

4. A transmission system according to any of claims 1 to 3, **characterized in that** said second electro-optical modulator (3, 4) is an electro-absorption modulator.

5. A transmission system according to any of claims 1 to 3, **characterized in that** said second electro-optical modulator (3, 4) is a "Mach-Zehnder" interferometer structure modulator.

6. A transmission system according to any of claims 1 to 3, **characterized in that** said second electro-optical modulator (3, 4) is an electro-absorption modulator biased to apply a non-zero "chirp".

7. A transmission system according to any of claims 1 to 3, **characterized in that** said second electro-optical modulator (3, 4) is a "Mach-Zehnder" interferometer structure modulator biased to apply a non-zero "chirp".
